# EUROPEAN PATENT APPLICATION

(11) **EP 2 785 086 A1**
(43) Date of publication of application: **01.10.2014**
(21) Application number: 12862896.3
(22) Date of filing: 23.02.2012
(51) Int. Cl.: H04W 8/24

(54) **SOCIAL NETWORK USER INFORMATION ASSOCIATION METHOD AND DEVICE**

(30) Priority: 29.12.2011 CN 201110451041
(71) Applicant: ZTE Corporation, Shenzhen, Guangdong 518057 (CN)
(72) Inventor: SHANG, Guoqiang, Shenzhen Guangdong 518057 (CN); CHEN, Jun, Shenzhen Guangdong 518057 (CN); YAO, Lizhe, Shenzhen Guangdong 518057 (CN); LU, Yan, Shenzhen Guangdong 518057 (CN)
(74) Representative: Bokinge, Ole
(86) International application number: PCT/CN2012/071552
(87) International publication number: WO 2013/097335

(57) **Abstract**

The present invention discloses a social network user information association method and apparatus. Personal information of a friend in a user social network is associated with a local contact list of a user terminal, and the association comprises: establishing, in a user terminal, a correspondence relationship between a record of contact in the local contact list and personal information of the contact in one or more social networks. With the method and the apparatus of the present invention, a user can also conveniently use the user information and personal information of a friend of MSN or IM and so on, without logging in to MSN or IM.

## Description

### Technical Field

The present invention relates to the communication technology field, and in particular, to a social network user information association method and apparatus.

### Background of the Related Art

The social network (SN) is a network address book application with multiple views, and the current social network presents the specialized side, that is, the industry type involved in a certain type of SN is very accurate, and such a result is that there are many different types of SNs. The current situation is that the users are registered in different SNs, and there is the user personal information in each SN; since the types of the SNs are different and the focus points of the user personal information are different to some extent, and there is no channel for intercommunication between different SNs, that is, there is a "garden wall" between the so-called SN, the "garden wall" not only blocks the user personal information but also blocks the intercommunication of user information and friend list in each SN. So, the user has to perform the switchover among multiple SNs to constantly send and receive the message or perform communication with the friend of the located SN, and this increases the extra work load virtually and causes very great convenience.

The Instant Messenger (IM) service has a similar problem as well, that is, if the user wants to use the user information of the IM, then the user must log in to the IM client, and the user list information only can be seen in case of log-in.

In sum, the related technology has the following disadvantage or insufficient: the user can only use the relevant user information in case of logging in to the mobile social network (MSN) (including the instant messenger service), thus the usage experience of the user is reduced. So, how to enable the user to search for the friend information of the user without log-in, and use the information to perform the relevant communication, is the problem required to be solved urgently in the related art.

### Summary of the Invention

The technical problem that the present invention solves is to provide a social network user information association method and apparatus, so that a user is able to conveniently use the user information and personal information of friend of the MSN or the IM without logging in to the MSN or the IM.

In order to solve the above-mentioned technical problem, the present invention provides a social network user information association method, comprising:
establishing an association between personal information of a friend in a user social network and a local contact list of a user terminal, wherein, the association comprises: establishing, in a user terminal, a correspondence relationship between a record of contact in the local contact list and personal information of the contact in one or more social networks.

Optionally, in the method, before the step of establishing an association between personal information of a friend in a user social network and a local contact list of a user terminal, the method further comprises:
when logging in to the social network, the user terminal obtaining the personal information of the friend of the user in one or more social networks from the social network, and storing the personal information locally;
wherein, the personal information of the friend in the social network comprises one or any combination of the following information: user name, telephone number, E-mail address, personal homepage address and status information.

Optionally, in the method, the step of establishing, in a user terminal, a correspondence relationship between a record of contact in the local contact list and personal information of the contact in one or more social networks comprises:
matching the personal information of the friend and the record of contact in the local contact list through a matching condition, an index entry or a keyword, and establishing a correspondence relationship between the record of contact and personal information matched successfully;
wherein, the matching condition, the index entry or the keyword comprises one or any combination of the following information: user name, telephone number, and E-mail address.

Optionally, in the method,
after the step of matching the personal information of the friend and the record of contact in the local contact list through a matching condition, an index entry or a keyword, the method further comprises: establishing a converged contact list in the user terminal, wherein, the converged contact list comprises a combination entry of the successfully matched record of contact and the personal information, and a unsuccessfully matched record of contact in the local contact list, and unsuccessfully matched personal information of a social network friend of the user.

Optionally, the method further comprises:
establishing a corresponding relationship among the personal information of the friend of the user in different social networks according to the matching condition, the index entry or the keyword.

Optionally, the method further comprises:
establishing a subscription relationship for obtaining the personal information of the friend in the social network, and updating or re-establishing the correspondence relationship between the personal information of the friend and the record of contact in the local contact list when knowing that the personal information of the friend changes.

Optionally, the method further comprises:
performing network backup to the converged contact list in the terminal through a format of network address book.

The present invention further provides a mobile social network user information association apparatus, applied in a social network terminal, comprising an association module, wherein,
the association module is configured to establish an association between personal information of a friend in a user social network and a local contact list of a social network terminal, wherein, the association comprises: establishing, in the social network terminal, a correspondence relationship between a record of contact in the local contact list and personal information of the contact in one or more social networks.

Optionally, the apparatus further comprises a user information obtaining module connected to the association module, wherein,
the user information obtaining module is configured to: when logging in to the social network, obtain the personal information of the friend of the user in one or more social networks from the social network, and store the personal information locally;
wherein, the personal information of the friend in the social network comprises one or any combination of the following information: user name, telephone number, E-mail address, personal homepage address and status information.

Optionally, in the apparatus,
the association module is configured to realize establishing, in the social network terminal, the correspondence relationship between the record of contact in the local contact list and the personal information of the contact in one or more social networks through the following mode: matching the personal information of the friend and the record of contact in the local contact list through a matching condition, an index entry or a keyword, and establishing a correspondence relationship between the record of contact and personal information matched successfully;
wherein, the matching condition, the index entry or the keyword comprises one or any combination of the following information: user name, telephone number, and E-mail address.

Optionally, in the apparatus,
the association module is further configured to: after matching the personal information of the friend and the record of contact in the local contact list is completed, establish a converged contact list in the social network terminal, wherein, the converged contact list comprises a combination entry of the successfully matched record of contact and personal information, a unsuccessfully matched record of contact in the local contact list, and unsuccessfully matched personal information of a social network friend of the user; or
a corresponding relationship among the personal information of the friend of the user in different social networks is established according to the matching condition, the index entry or the keyword.

Optionally, in the apparatus,
the user information obtaining module is further configured to establish a subscription relationship for obtaining the personal information of the friend in the social network, and notify the association module to update or re-establish the correspondence relationship between the personal information of the friend and the record of contact in the local contact list when knowing that the personal information of the friend changes.

The present invention provides a social network user information association method and apparatus, and the personal information of the friend of the MSN or the IM can be used conveniently without logging in to the MSN or the IM, and the user can be made to initiate the relevant operation through these user information.

### Brief Description of Drawings

FIG. 1 is a diagram of establishing an association relationship of information of a friend of a user according to an embodiment of the present invention;
FIG. 2 is a diagram of establishing a converged contact list according to an embodiment of the present invention.

### Preferred Embodiments of the Present Invention

The embodiment of the present invention is described in detail with reference to the accompanying drawings hereinafter. It should be illustrated that, in the case of no conflicts, the embodiments in the present application and features in these embodiments can be combined with each other.

The present embodiment provides a social network user information association method, which adopts the following scheme:
establishing an association between personal information of a friend in a user social network and a local contact list of a user terminal, wherein, the association comprises: establishing, in a user terminal, a correspondence relationship between a record of contact in the local contact list and personal information of the contact in one or more social networks.

Optionally, before establishing an association between personal information of a friend in a user social network and a local contact list of a user terminal, the method further comprises:
when logging in to the social network, the user terminal obtaining the personal information of the friend of the user in one or more social networks from the social network, and storing locally;
wherein, the personal information of the friend in the social network comprises but not limited to one or any combination of the following information: user name, telephone number, E-mail address, personal homepage address and status information.

Optionally, establishing, in a user terminal, a correspondence relationship between a record of contact in the local contact list and personal information of the contact in one or more social networks specifically includes:
storing the personal information of the friend of the user in one or more social networks locally;
matching the personal information of the friend and the record of contact in the local contact list through a matching condition, an index entry or a keyword, and establishing a correspondence relationship between the successfully matched record of contact and personal information;
wherein, the matching condition, the index entry or the keyword comprises one or any combination of the following information: user name, telephone number, and E-mail address.

Thus, the user can search for the personal information of the friend corresponding to the contact in the social network, such as, E-mail address, personal homepage address etc., according to the real name in the record of contact in the local contact list and so on; or, the user can search for the record of contact corresponding to the friend in the local contact list, including the real name, the telephone number and so on, according to the personal information of the friend in the social network, such as through the user name in the network.

Optionally, the method further includes:
after matching the personal information of the friend and the record of contact in the local contact list is completed, establishing a converged contact list in the user terminal, wherein, the converged contact list includes a combination entry of the successfully matched record of contact and the personal information, a unsuccessfully matched record of contact in the local contact list, and unsuccessfully matched personal information of a social network friend of the user.

Optionally, the method further includes:
establishing a corresponding relationship among the personal information of the friend of the user in different social networks according to the matching condition, the index entry or the keyword.

Optionally, the method further includes:
establishing a subscription relationship for obtaining the personal information of the friend in the social network, and updating or re-establishing the correspondence relationship between the personal information of the friend and the record of contact in the local contact list when knowing that the personal information of the friend changes.

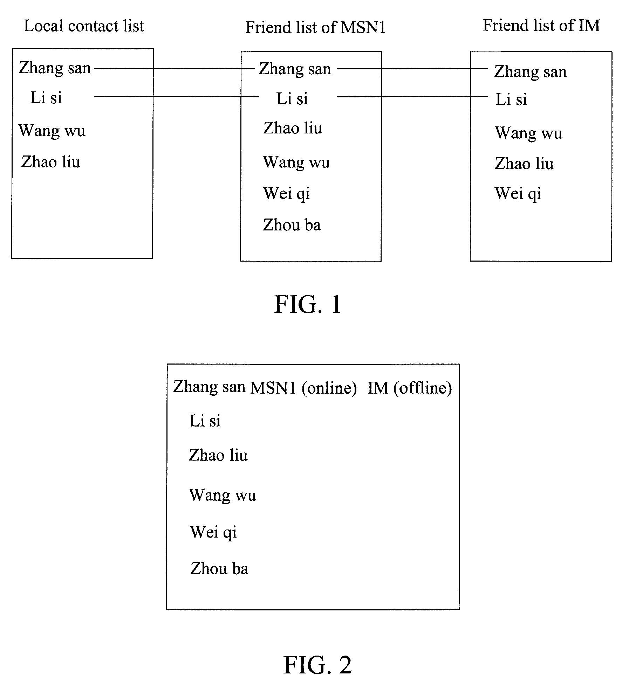

The mobile social network user information association method of the embodiment of the present invention specifically includes following contents:
1, the friend list information of the user of the MSN or the IM is backed up locally, and the personal information of the friend of the user of the MSN or the IM is stored locally, including the information such as user name, E-mail, telephone number, status, but not limited to these information.
2, the association of the friend list information of the user of the MSN or the IM and the local contact list is established.
   As shown in FIG. 1, after the friend list information of the user of the MSN and the IM is established or re-established locally, an association between these information and the local contact list is established, or an association relationship can also be established with each other among the local list information of different MSNs and IMs, etc.
   The association can use the information, such as the user name, the telephone number, the E-mail and so on, as a matching condition (or as a common index entry, or as a matching keyword). The association can be established directly on condition that the matching is successful, such as, establishing the correspondence relationship between the personal information of the friend and the contact in the local contact list. The MSN or the IM to which the user belongs can be known from the local contact list through the correspondence relationship, and the information of the user in the local contact list also can be known through the list information of the MSN/IM stored locally, such as, the telephone number, etc.
   For the user information of the MSN/IM that cannot be matched, then a converged contact list can be established locally, as shown in FIG. 2. The converged contact list can be a set of the local contact list +IM +MSN contact, and the converged contact list can be a big entitative contact list (that is, visible to the user), and it also can be realized by adopting the format of a local virtual list, that is, invisible to the user. Certainly, it may not adopt the policy of the converged contact list as well, and then it is not processed.
3, for the friend list information of the user of the MSN and the IM established locally, the subscription relationship for obtaining its status information is established, to ensure the user be able to update the status information of the user in the list in time. And after the important information of the user (such as, the telephone number, the E-mail, etc.) changes, the association relationship needs to be re-established for the relationship with the local contact list.
4, the relevant service is initiated by utilizing the ability of the terminal itself, for example, the personal information of the friend can be found in the MSN list, and the service, such as, conversation, short messaging service (SMS), multimedia messaging service (MMS), EMAIL, etc., is initiated to the user.

Wherein, for the local contact list and the local friend list information of the user of the MSN/IM between which the correspondence relationship is established, the following processing mode can be adopted:
a), a converged contact list is established locally, including the local contact list, the friend list information of the MSN/IM, etc., and its ownership and relationship are marked;
b), a new converged contact list can be established on the converged address book (CAB), to embody the association relationship with each other, and the update of the status information of the user of the MSN/IM is established through the network characteristic of the CAB, to update the user status on the terminal finally. As shown in FIG. 2, it can be displayed and operated more visually through establishing the converged contact list, to prevent the user from switching over among different address books.

The scheme of the present invention is further illustrated in detail by combining the mobile social network user information association method of the application example of the present invention hereinafter. The processing procedure of the present example mainly includes the following steps:
in step 1, the friend list information of the user of the MSN and the IM is established locally, the content contained in the list information includes, the user name, the telephone number, the EMAIL address, the status information, etc. The step further includes:
   in step 101, in case of not logging in to the MSN and the IM, the friend list of the user of the MSN/IM is established locally.

It can be specifically: initiating a request for obtaining the friend list information on the terminal, the server needs to return the corresponding information after performing the relevant authorization operation, and the terminal establishes the contact list information locally after receiving the information from the server.

In step 102, in case of logging in to the MSN and the IM, the local contact list of the friend list of the user is established locally.

The method for establishing the friend list information of the user in the MSN/IM of the user locally can use the similar method, such as, the Synchronization Markup Language (SyncML) and so on, and it will be described in details here.

In step 2, the keyword is used as the main way to establish the association, for example, the keyword can be a telephone number, a user name, an email address, etc., and the selection of the keyword can be one or a combination of more.

The association mainly should be established between the friend list of the user established locally by the MSN and IM and the local contact list, while also can be established between different MSNs and between MSNs and IMs, and the purpose is that the user information of each other can be used between different contact lists.

In addition, for the contact list after the association is established, one converged contact list can also be established locally, that is, including the local contact list, the local friend list information of the MSN/IM and so on, which indicates the mutual relationship, and it can save the space by way of combining and deleting and can also guarantee the mutual relationship to be clear.

In addition, an address book corresponding to the terminal can also be re-established in the network through the operation mode of the current network address book, such as CAB.

In step 3, the subscription relationship is established between the local friend list of the user of the MSN and IM and the user of the MSN and IM network; when the user status changes, it can be updated on the terminal in time; after the keyword information of the user changes, it needs to update and re-establish the relevant association relationship in time. Wherein, the status information can be used as the condition of initiating the corresponding communication in step 4.

In step 4, the information of the user contact list can be fully utilized through the local contact list and the local user list of the MSN/IM, to reach the ability for communicating with its friend or initiating other services as many as possible. If it is inconvenient for the user to use the relevant service on the MSN and the IM, so long as the friend information of these services is provided, then he/she can also contact with these friends. There can be various formats of the modes of the contacts, for example, he/she can initiate the conversation. The telephone number of the friend is associated with the local contact list through the friend list information of the MSN, then he/she can know the telephone number of the friend, and the MSN or the IM is like a grouping type even more.

Certainly, if there is a corresponding communication interface among the Short Message Service Center (SMSC), the Multimedia Message Service Center (MMSC), the EMAIL server, and the MSN and IM server, then it can also realize sending the information to its MSN and IM by using the friend list information of the user of the relevant MSN and IM under a situation that the user does not log in; for example, referring to the user status in step 3, when a user MSN is online, the terminal can initiate a communication in the MSN service to it through the mode, such as SMS, MMS and so on, and the terminal can receive the information sent to the user of the terminal by a user in the MSN.

In addition, the embodiment of the present invention further provides a mobile social network user information association apparatus, applied in a mobile social network terminal, mainly including an association module, wherein,
the association module is configured to establish an association between personal information of a friend in a user social network and a local contact list of a social network terminal, wherein, the association comprises: establishing, in the social network terminal, a correspondence relationship between a record of contact in the local contact list and personal information of the contact in one or more social networks.

Optionally, the apparatus further includes a user information obtaining module connected to the association module, wherein,
the user information obtaining module is configured to: when logging in to the social network, obtain the personal information of the friend of the user in one or more social networks from the social network, and store the personal information locally;
wherein, the personal information of the friend in the social network includes but not limited to one or any combination of the following information: user name, telephone number, E-mail address, personal homepage address and status information.

Optionally, the association module is configured to realize establishing, in the social network terminal, the correspondence relationship between the record of contact in the local contact list and the personal information of the contact in one or more social networks through the following mode: matching the personal information of the friend and the record of contact in the local contact list through a matching condition, an index entry or a keyword, and establishing a correspondence relationship between a successfully matched record of contact and personal information;
wherein, the matching condition, the index entry or the keyword includes but not limited to one or any combination of the following information: user name, telephone number, and E-mail address.

Optionally, the association module is further configured to: after matching the personal information of the friend and the record of contact in the local contact list is completed, establish a converged contact list in the social network terminal, wherein, the converged contact list comprises a combination entry of the successfully matched record of contact and the personal information, a unsuccessfully matched record of contact in the local contact list, and unsuccessfully matched personal information of a social network friend of the user; or
a corresponding relationship among the personal information of the friend of the user in different social networks is established according to the matching condition, the index entry or the keyword.

Optionally, the user information obtaining module is further configured to establish a subscription relationship for obtaining the personal information of the friend in the social network, and notify the association module to update or re-establish the correspondence relationship between the personal information of the friend and the record of contact in the local contact list when knowing that the personal information of the friend changes.

The above description is only the preferred embodiments of the present invention and is not intended to limit the present invention. The present invention can have a variety of other embodiments. Those skilled in the art can make the corresponding modifications and variations according to the present invention without departing from the spirit and essence of the present invention. And all of these modifications or the variations should be included in the protection scope of the appended claims of the present invention.

Obviously, it can be understood by those skilled in the art that each module or each step above-mentioned in the present invention can be implemented by the universal calculating apparatus, and they can be integrated in a single calculating apparatus, or distributed in the network made up of a plurality of calculating apparatus. Alternatively, they can be implemented by the executable program codes of the calculating apparatus. Accordingly, they can be stored in the storage apparatus and implemented by the calculating apparatus, and in some situation, the shown or described steps can be executed according to an order different from the order described herein, or they are made into various integrated circuit modules, or a plurality of modules or steps therein are made into the single integrated circuit module to be implemented. Thus, the present invention is not limit to any specific form of the combination of the hardware and software.

### Industrial Applicability

The embodiment of the present invention provides a social network user information association method and apparatus, and a user can conveniently use the user information and the personal information of friend of the MSN or IM without logging in to the MSN or IM, and the user can be made to initiate the relevant operation through these user information.

## Claims

1. A social network user information association method, comprising:
establishing an association between personal information of a friend in a user social network and a local contact list of a user terminal, wherein, the association comprises: establishing, in the user terminal, a correspondence relationship between a record of contact in the local contact list and personal information of the contact in one or more social networks.

2. The method according to claim 1, wherein before the step of establishing an association between personal information of a friend in a user social network and a local contact list of a user terminal, the method further comprises:
when logging in to the social network, the user terminal obtaining the personal information of the friend of a user in one or more social networks from the social network, and storing the personal information of the friend locally;
wherein, the personal information of the friend in the social network comprises one or any combination of following information: user name, telephone number, E-mail address, personal homepage address and status information.

3. The method according to claim 1 or 2, wherein, the step of establishing, in the user terminal, a correspondence relationship between a record of contact in the local contact list and personal information of the contact in one or more social networks comprises:
matching the personal information of the friend and the record of contact in the local contact list through a matching condition, an index entry or a keyword, and establishing a correspondence relationship between a successfully matched record of contact and personal information;
wherein, the matching condition, the index entry or the keyword comprises one or any combination of following information: user name, telephone number and E-mail address.

4. The method according to claim 3, wherein,
after the step of matching the personal information of the friend and the record of contact in the local contact list through a matching condition, an index entry or a keyword, the method further comprises: establishing a converged contact list in the user terminal, wherein, the converged contact list comprises a combination entry of the successfully matched record of contact and personal information, a unsuccessfully matched record of contact in the local contact list and unsuccessfully matched personal information of a social network friend of the user.

5. The method according to claim 3, further comprising:
establishing a corresponding relationship among the personal information of the friend of the user in different social networks according to the matching condition, the index entry or the keyword.

6. The method according to claim 3, further comprising:
establishing a subscription relationship for obtaining the personal information of the friend in the social network, and updating or re-establishing the correspondence relationship between the personal information of the friend and the record of contact in the local contact list when knowing that the personal information of the friend changes.

7. The method according to claim 4, further comprising:
performing network backup to the converged contact list in the terminal through a format of network address book.

8. A mobile social network user information association apparatus, applied in a social network terminal, comprising an association module, wherein,
the association module is configured to establish an association between personal information of a friend in a user social network and a local contact list of a social network terminal, wherein, the association comprises: establishing, in the social network terminal, a correspondence relationship between a record of contact in the local contact list and personal information of the contact in one or more social networks.

9. The apparatus according to claim 8, further comprising a user information obtaining module connected to the association module, wherein,
the user information obtaining module is configured to: when logging in to the social network, obtain the personal information of the friend of the user in one or more social networks from the social network, and store the personal information of the friend locally;
wherein, the personal information of the friend in the social network comprises one or any combination of following information: user name, telephone number, E-mail address, personal homepage address and status information.

10. The apparatus according to claim 8 or 9, wherein,
the association module is configured to realize establishing, in the social network terminal, the correspondence relationship between the record of contact in the local contact list and the personal information of the contact in one or more social networks through a following mode: matching the personal information of the friend and the record of contact in the local contact list through a matching condition, an index entry or a keyword, and establishing a correspondence relationship between a successfully matched record of contact and personal information;
wherein, the matching condition, the index entry or the keyword comprises one or any combination of following information: user name, telephone number and E-mail address.

11. The apparatus according to claim 10, wherein,
the association module is further configured to: after matching the personal information of the friend and the record of contact in the local contact list is completed, establish a converged contact list in the social network terminal, wherein, the converged contact list comprises a combination entry of the successfully matched record of contact and personal information, a unsuccessfully matched record of contact in the local contact list, and unsuccessfully matched personal information of a social network friend of the user; or
to establish a corresponding relationship among the personal information of the friend of the user in different social networks according to the matching condition, the index entry or the keyword.

12. The apparatus according to claim 10, wherein:
the user information obtaining module is further configured to establish a subscription relationship for obtaining the personal information of the friend in the social network, and notify the association module to update or re-establish the correspondence relationship between the personal information of the friend and the record of contact in the local contact list when knowing that the personal information of the friend changes.
